# EUROPÄISCHE PATENTSCHRIFT

(11) **EP 2 083 312 B1**
(45) Veröffentlichungstag und Bekanntmachung des Hinweises auf die Patenterteilung: **15.05.2013**
(21) Anmeldenummer: 08450193.1
(22) Anmeldetag: 10.12.2008
(51) Int. Cl.: B29D 12/02, G02C 5/00

(54) **Rahmen für eine optische Brille und Verfahren zu dessen Herstellung**
Frame for an optical lens and method for its manufacture
Cadre pour des lunettes optiques et son procédé de fabrication

(30) Priorität: 24.01.2008 AT 972008
(43) Veröffentlichungstag der Anmeldung: 29.07.2009
(73) Patentinhaber: Andy Wolf Fashion GmbH, 8230 Hartberg (AT)
(72) Erfinder: Stadlmann, Klaus, 2514 Traiskirchen (AT)
(74) Vertreter: Weiser, Andreas

(56) Entgegenhaltungen:
- EP-A- 0 332 540
- WO-A1-2010/034911
- DE-A1- 3 448 075
- DE-A1- 10 148 181
- JP-A- 60 095 422
- US-A- 4 666 265
- US-A- 5 304 421

## Beschreibung

Die vorliegende Erfindung betrifft einen Rahmen für eine optische Brille, einstückig gebildet aus einem mit Linsenöffnungen versehenen, geschichteten, kohlefaserhältigen Verbundmaterial mit zumindest einer Kohlefaserschicht. Die Erfindung betrifft ferner ein Verfahren zum Herstellen eines solchen Rahmens.

Ein derartiger Brillenrahmen ist aus der FR 2 835 323 bekannt und weist eine einzige Lage eines Kohlefasergewebes auf, das in ein Kunststoffmaterial eingegossen ist. Der Brillenrahmen der FR 2 835 323 ist somit eine herkömmliche Kunststoffassung, die zwar zur Verstärkung eine Kohlefasergewebeschicht enthält, deren Form, Dicke, Elastizität und Festigkeit jedoch wesentlich durch das Kunststoffmaterial mitbestimmt wird.

Die Dokumente US 4 666 265, DE 34 48 075, US 5 304 421 und JP 60 095422 offenbaren auch einen Rahmen für eine optische Brille, der mit Glas- oder Kohlenstoffasern verstärkt ist.

Das Dokument EP 0 332 540 beschreibt einen Rahmen für eine optische Brille, gebildet aus einem geschichteten, kohlerfaserhältigen und glasfaserhältigen Verbundmaterial. Der Rahmen besteht aus zwei Stücken und die Schichten sind konzentrisch angeordnet.

Aus der WO 2001/70498 ist ein thermoverformbares Verbundmaterial für Brillenrahmen bekannt, welches aus Holzschichten besteht, zwischen denen Kohlefaserschichten in thermisch verformbaren Epoxyharz eingebettet und mit einem thermisch verformbaren Klebstoff mit den Holzschichten verbunden sind. Aufgrund der Holzkonstruktion ist ein aus diesem Verbundmaterial hergestellter Rahmen dick und bruchgefährdet.

Die Erfindung setzt sich zum Ziel, einen Rahmen für eine optische Brille zu schaffen, der dünner und leichter ist als die bekannten Konstruktionen und dabei widerstandsfähig und elastisch ist, um dem Alltagsgebrauch zu widerstehen. Dieses Ziel wird in einem ersten Aspekt der Erfindung mit einem Rahmen der einleitend genannten Art erreicht, der sich gemäß der Erfindung dadurch auszeichnet, daß das Verbundmaterial zusätzlich zu der mindestens einen Kohlefaserschicht auch zumindest eine Glasfaserschicht umfaßt.

Auf diese Weise wird eine tragende Struktur aus einem Kohlefaser/Glasfaser-Verbund geschaffen, welche hohe Festigkeit und Elastizität hat, um eine Brille mit überaus dünnem Rahmen und hohem Tragekomfort aufzubauen. Die Kohlefaserschicht sorgt dabei für hohe Steifigkeit und die Glasfaserschicht für hohe Flexibilität des Rahmens. Darüberhinaus schützt die flexiblere Glasfaserschicht den Benützer im Falle eines Bruchs der spröderen Kohlefasern vor einem Austreten spitzer Kohlefaserbruchstücke aus dem Brillenrahmen.

Die Erfindung offenbart einen Rahmen für eine optische Brille gemäß Anspruch 1.

Besonders vorteilhaft ist es, wenn das Verbundmaterial insgesamt vier bis zwölf, bevorzugt sechs bis zehn, besonders bevorzugt acht Faserschichten umfaßt, von denen zwei bis sechs Kohlefaserschichten und zwei bis sechs Glasfaserschichten sind. Dadurch kann einerseits die zur Aufnahme der Linsen erforderliche Dicke erreicht werden, anderseits ist der Rahmen so dünn wie gerade möglich, um die entsprechende Festigkeit und Elastizität zu erzielen.

Gemäß einer bevorzugten Ausführungsform der Erfindung sind die Faserschichten aus Fasergewebe- oder Fasergelege-Prepregs gebildet. Prepregs erreichen im ausgehärteten Zustand durch den innigen Verbund von Fasern und Kunststoffmatrix hohe Festigkeit. Durch gemeinsames Preßhärten übereinandergeschichteter Prepregs kann überdies ohne zusätzliche Verbindungsmaterialien der Rahmen in einem einzigen Schritt in der gewünschten Endform gefertigt werden.

Wenn als Faserschichten Prepregs verwendet werden, ist es besonders günstig, die Umfangsform des Rahmens durch Schneiden oder bevorzugt Stanzen des Verbundmaterials vor der Aushärtung der Prepregs zu erzeugen. Das geschnittene bzw. gestanzte Verbundmaterial ergibt einen flachen Vorformling, der anschließend durch Aushärten der Prepregs zum Rahmen endgeformt werden kann.

Die Kohle- und Glasfaserschichten können in der gewünschten Anzahl in beliebiger Aufeinanderfolge aufgeschichtet sein. Besonders vorteilhaft ist es, wenn gemäß einem weiteren bevorzugten Merkmal der Erfindung die Kohlefaser- und Glasfaserschichten im Verbundmaterial - mit Ausnahme der beiden innersten Schichten, welche gegebenenfalls gleich sein können - einander abwechseln, was ausgewogene Elastizitätseigenschaften ergibt.

Zur Erhöhung der Festigkeit kann in vorteilhafter Weise vorgesehen werden, daß zumindest zwei übereinanderliegende Schichten gegeneinander verdreht sind, bevorzugt um 45°.

Besonders günstig ist es ferner, wenn die beiden äußersten Schichten des Verbundmaterials Glasfaserschichten sind. Dadurch kann das äußere Erscheinungsbild des Rahmens in weiten Grenzen eingestellt werden, da Farbe und Textur von Glasfasern leichter veränderbar sind als von Kohlefasern.

Zu diesem Zweck ist es besonders günstig, wenn zumindest eine der Glasfaserschichten aus gefärbten oder beschichteten Glasfasern gefertigt ist, bevorzugt aus metallisierten Glasfasern, besonders bevorzugt aus verchromten, aluminium- oder goldbedampften Glasfasern.

In vorteilhafter Weise wird der Rahmen mit einem Schutzlack versehen, bevorzugt auf Polyesterharzbasis. Dadurch kann eine besonders glatte Oberfläche des Rahmens erreicht werden.

Gemäß einem weiteren bevorzugten Merkmal der Erfindung ist der Rahmen mit Dehnschlitzen versehen, um das Einsetzen von Linsen in die Linsenöffnungen zu erleichtern.

In einem zweiten Aspekt schafft die Erfindung ein Verfahren zum Herstellen eines Rahmens für eine optische Brille gemäß Anspruch 19

Hinsichtlich der Vorteile des Verfahrens der Erfindung wird auf die obigen Ausführungen verwiesen. Das Herstellungsverfahren der Erfindung eignet sich sowohl für individuelle Kleinserien als auch industrielle Großserien: Da die Umfangsform des Rahmens durch entsprechendes Ausschneiden des Vorformlings beliebig bestimmt werden kann, lassen sich individuelle Rahmenformen rasch verwirklichen. Anderseits kann diese Art der Formgebung gerade auch in die Großserienfertigung durch maschinelles Stanzen oder Schneiden automatisiert werden.

Weitere Merkmale und Vorteile des erfindungsgemäßen Herstellungsverfahrens ergeben sich aus den Unteransprüchen und der folgenden Beschreibung bevorzugter Ausführungsbeispiele unter Bezugnahme auf die beigeschlossenen Zeichnungen, in den zeigen:
Fig. 1 einen Vorformling aus geschichtetem Verbundmaterial zum Aufbau des Rahmens der Erfindung in einer schematischen, teilweise aufgerissenen Perspektivansicht;
die Fig. 2a bis 2d alternative Varianten des Verbundmaterials in gesprengten, stark vergrößerten Schnittansichten;
Fig. 3 eine gesprengte Perspektivansicht der Preßform zum Krümmen und Aushärten des Vorformlings von Fig. 1 zum endgeformten Rahmen;
Fig. 4 die Preßform von Fig. 3 in geschlossener Stellung in einer Perspektivansicht;
Fig. 5 eine alternative Ausführungsform der Schablone und des Stempels der Preßform in einer Perspektivansicht;
die Fig. 6 bis 8 den endgeformten Rahmen in der Vorderansicht, Seitenansicht bzw. Draufsicht; und
die Fig. 9 und 10 das Einsetzen einer Linse und Anbringen eines Brillenbügels am Rahmen in einer teilweisen Vorder- bzw. Seitenansicht.

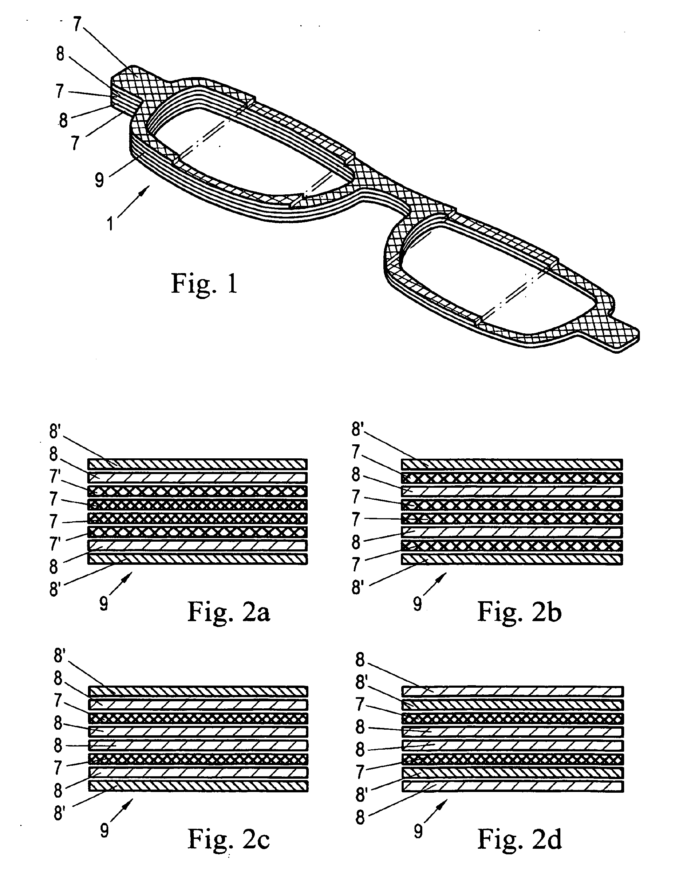

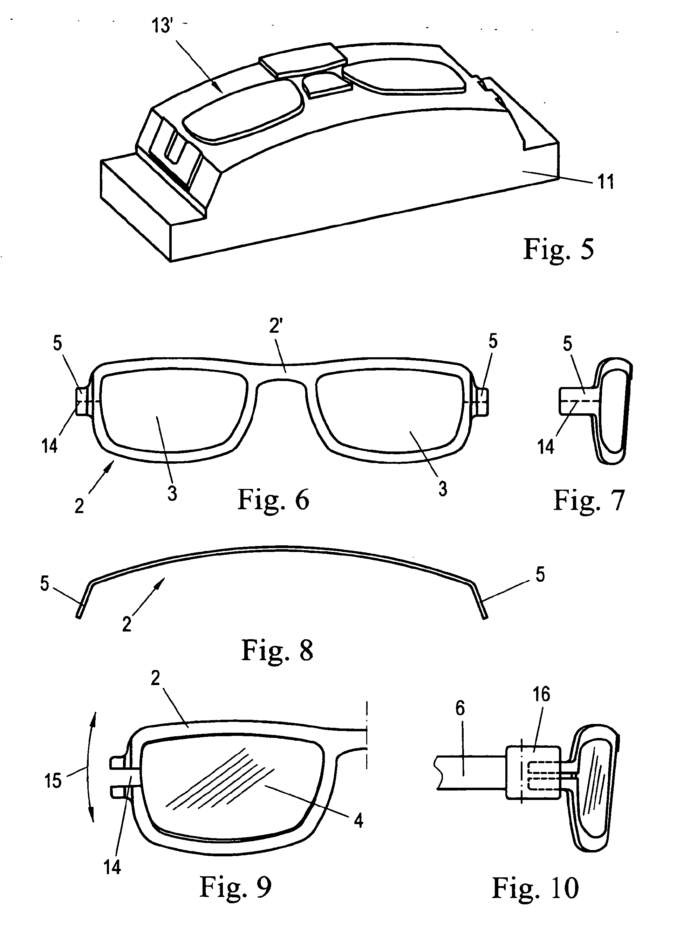

Fig. 1 zeigt einen flächigen Vorformling 1 zur Herstellung eines Brillenrahmens 2, der in den Fig. 6 bis 8 in fertiggestellter Form gezeigt ist. Der Rahmen 2 besitzt in herkömmlicher Art und Weise Linsenöffnungen 3 zum Einsetzen optischer Linsen 4 (Fig. 9) und ist, wie aus Fig. 8 ersichtlich, "gemuschelt", d.h. geringfügig konvex gekrümmt, um sich besser an den Kopf des Trägers anzupassen. Seitliche Laschen 5 dienen zum Anbringen von Ohrbügeln 6 (Fig. 10), welche optional auch einstückig mit dem Rahmen 2, d.h. als Verlängerung der Laschen 5, ausgebildet sein könnten.

Zurückkehrend auf Fig. 1 wird der Rahmen 2 einstückig aus dem flachen Vorformling 1 gefertigt. Der Vorformling 1 ist aus einem Flachmaterial geschnitten oder gestanzt, das gestapelte Kohlefaserschichten 7 und Glasfaserschichten 8 umfaßt. Obwohl grundsätzlich alle Arten von in der Technik bekannten Kohlefaser- und Glasfaserschichten verwendet werden könnten, werden für die Schichten 7, 8 bevorzugt Prepregs aus Fasergeweben oder Fasergelegen verwendet.

Unter "Prepregs" werden Halbzeuge aus Endlosfasern verstanden, die in einer noch ungehärteten, duroplastisch aushärtbaren Kunststoffmatrix eingebettet sind, z.B. mit aushärtbarem Kunstharz getränkte ("vor-imprägnierte", d.h. "preimpregnated") Fasermatten. Im weiteren werden daher insbesondere solche Schichten 7, 8 betrachtet, die durch Kohlefaser-Prepregs 7 bzw. Glasfaser-Prepregs 8 gebildet sind.

Die Prepregs 7, 8 werden zu einem flächigen Verbundmaterial 9 aufgeschichtet, aus welchem dann die - flächig abgewickelte - Umfangsform des Rahmens 2 ausgeschnitten oder ausgestanzt wird, um den Vorformling 1 zu bilden. Es ist zu beachten, daß die Darstellung des Vorformlings 1 in Fig. 1 in Schichtdickenrichtung stark vergrößert und nicht maßstabsgerecht ist: In einer bevorzugten Ausführungsform beträgt die Dicke jedes Prepregs 7, 8 beispielsweise 0,2 mm im unausgehärteten Zustand.

Die Prepregs 7, 8 sind bevorzugt aus Fasergeweben gebildet, wie schematisch in Fig. 1 angedeutet. Beim Aufschichten der Prepregs 7, 8 können diese jeweils gegeneinander um einen bestimmten Winkel verdreht werden, beispielsweise, wie in Fig. 1 gezeigt, abwechselnd um 45° gegeneinander verdreht. Auch andere Verdrehwinkel und Abfolgen sind möglich; beispielsweise können zwei Prepregs mit gleicher Webrichtung übereinandergelegt werden, dann folgen drei jeweils sukzessive um 30° verdrehte Prepregs, usw.

Die Anzahl der Prepreg-Schichten des Verbundmaterials 9 wird in Abhängigkeit von den gewählten Ausgangsdicken der Prepregs 7, 8, dem Komprimierungsgrad beim Aushärten des Vorformlings 1, der gewünschten Enddicke des Rahmens 2 und den gewünschten Festigkeits- und Elastizitätseigenschaften gewählt. Bevorzugt ist die Schichtabfolge im Verbundmaterial 9 symmetrisch von innen nach außen aufgebaut, wie aus den Fig. 1 und 2 ersichtlich.

Das Verbundmaterial 9 umfaßt jedenfalls zumindest ein Kohlefaser-Prepreg 7 und ein Glasfaser-Prepreg 8. Die Kohlefasern sind für die entsprechende Festigkeit und die Glasfasern für die entsprechende Elastizität des Verbundmaterials 9 verantwortlich. Bevorzugt umfaßt das Verbundmaterial 9 insgesamt vier bis zwölf, insbesondere bevorzugt sechs bis zehn, und ganz besonders bevorzugt acht Prepregs 7, 8, von denen insbesondere zwei bis sechs Kohlefaser-Prepregs 7 und zwei bis sechs Glasfaser-Prepregs 8 sind.

Die Fig. 2a bis 2d zeigen weitere beispielhafte Aufbauvarianten eines Verbundmaterials 9 aus acht Prepregs 7, 8. Die Prepregs 7, 8 haben hier jeweils eine Ausgangsdicke von 0,2 mm und der Vorformling 1 hat somit eine Dicke im unausgehärteten Zustand von 1,6 mm; nach der Heißpreßhärtung erreicht der fertige Rahmen 2 eine Enddicke von 1 mm.

In der ersten Variante von Fig. 2a setzt sich das Verbundmaterial 9 aus zwei innersten Kohlefaser-Prepregs 7 zusammen, welche von zwei weiteren Kohlefaser-Prepregs 7' umhüllt sind, die um 45° gegenüber den innersten Kohlefaser-Prepregs 7 verdreht sind. Die Gruppe von vier Kohlefaser-Prepregs 7, 7' ist von zwei Glasfaser-Prepregs 8 umgeben. Als äußerste Schichten dienen zwei weitere Glasfaser-Prepregs 8', die wieder um 45° gegenüber den Glasfaser-Prepregs 8 verdreht und überdies aus speziellen Glasfasern gefertigt sind, und zwar aus gefärbten oder beschichteten Glasfasern. Auf diese Weise lassen sich Farbe, Textur, Reflektionsverhalten usw. der Außenseiten des Rahmens 2 durch entsprechende Wahl der Glasfasern der Prepregs 8' einstellen. Bevorzugt werden metallisierte Glasfasern für die Prepregs 8' verwendet, beispielsweise verchromte, goldbedampfte oder besonders bevorzugt aluminiumbedampfte Glasfasern.

Fig. 2b zeigt eine weitere mögliche Ausführungsform des Verbundmaterials 9 mit zwei zentralen Kohlefaser-Prepregs 7, daran anschließenden Glasfaser-Prepregs 8, diese wiederum umgebenden Kohlefaser-Prepregs 7 und äußersten Glasfaser-Prepregs 8' aus durchgefärbten Glasfasern.

In der Ausführungsform von Fig. 2c umfaßt das Verbundmaterial 9 zwei zentrale Glasfaser-Prepregs 8, diese umgebende Kohlefaser-Prepregs 7, letztere umgebende Glasfaser-Prepregs 8 und schließlich zwei äußerste Glasfaser-Prepregs 8' aus verchromten Glasfasern.

Fig. 2d zeigt noch eine weitere Ausführungsform des Verbundmaterials 9 mit zwei zentralen Glasfaser-Prepregs 8, diese umgebenden Kohlefaser-Prepregs 7, beidseits anschließenden Glasfaser-Prepregs 8' aus aluminiumbedampften Glasfasern und Außenschichten aus unbeschichteten und ungefärbten Glasfaser-Prepregs 8, welche die darunterliegenden Glasfaser-Prepregs 8' durchscheinen lassen.

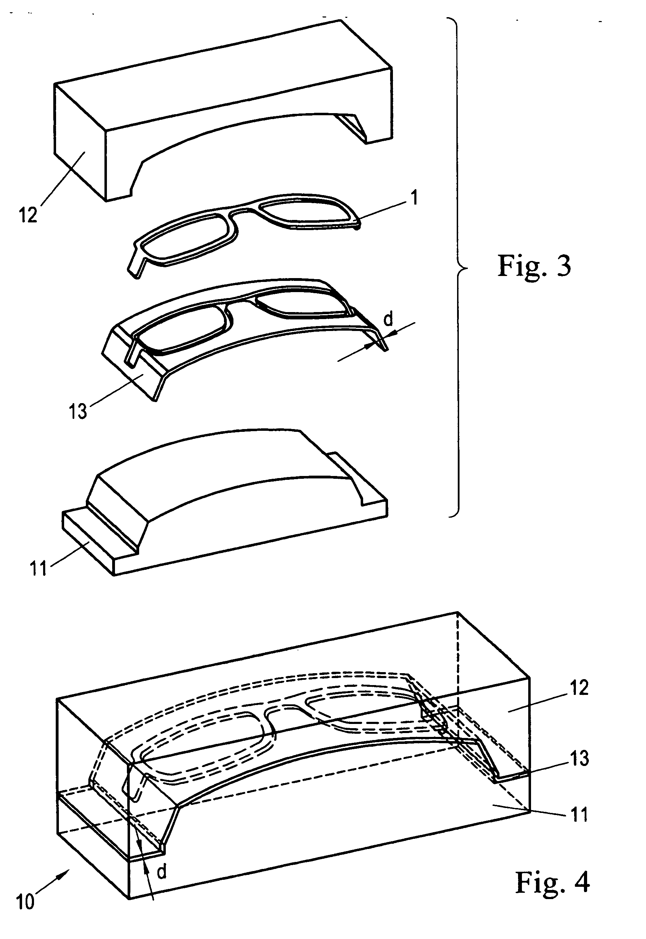

Das Verfahren zur Aushärtung des Vorformlings 1 zum Rahmen 2 mit Hilfe einer Preßform 10 wird nun anhand der Fig. 3 und 4 näher erläutert. Die dargestellte Preßform 10 ist im wesentlichen dreigeteilt und umfaßt einen Stempel 11, eine Matrize 12 und eine flächige Schablone 13, welche in dem Preßspalt zwischen Stempel 11 und Matrize 12 zu liegen kommt. Stempel 11 und Matrize 12 sind bevorzugt aus einem einzigen Metallblock mittels eines entlang seiner Trennlinie materialabtragenden Trennverfahrens gefertigt, wobei die Materialabtragungsbreite ("Zerspanungsbreite") etwa gleich der Dicke d der Schablone 13 ist, so daß die Schablone 13 formschlüssig in den Preßspalt einlegbar ist. Ein geeignetes materialabtragendes Trennverfahren ist beispielsweise Funkenerodieren.

Die Preßform 10 kann optional auch zum Herstellen zweidimensional gekrümmter Rahmen 2 verwendet werden, in welchem Fall die Oberflächen von Stempel 11 und Matrize 12 und die Schablone 13 entsprechend zweidimensional gekrümmt sind; die Fertigung von Stempel 11 und Matrize 12 durch Zertrennen eines einzigen Blocks in einem Schritt ist dann allerdings nicht mehr möglich.

Die Schablone 13 ist aus einem einzigen Stück Metallblech geschnitten oder gestanzt, beispielsweise aus Aluminium. Die Schablone 13 kann austauschbar zwischen Stempel 11 und Matrize 12 eingelegt oder auch auf den Stempel 11 oder die Matrize 12 aufgeklebt werden, z.B. mittels eines hochtemperaturfesten Silikonklebers.

Zum Aushärten wird der Vorformling 1 in die Preßform 10 eingelegt, und zwar paßgenau in die Aussparungen der Schablone 13, wodurch sich der Vorformling 1 an die Krümmung des Stempels 11 anpaßt. Die Preßform 10 wird geschlossen, mit Preßdruck beaufschlagt und beheizt oder in einen beheizbaren Autoklaven eingebracht, um durch Abfahren eines definierten Druck- und Temperaturzyklus die Prepregs 7, 8 auszuhärten. Beispielsweise erfolgt die Aushärtung des Vorformlings 1 unter einem Druck von 2 bis 8 bar auf einer Temperatur von 95°C über etwa 3 Stunden oder einer Temperatur von ca. 130°C über etwa 1 Stunde.

Bei der Heißpreßhärtung wird die Schichtdicke des Vorformling 1 auf die Dicke d der Schablone 13 als Enddicke des Rahmens 2 reduziert. In dem gezeigten Beispiel von acht Prepregs 7, 7', 8, 8' zu je 0,2 mm im unausgehärteten Zustand wird die Dicke d der Schablone 13 zu 1 mm gewählt.

Nach dem Aushärtezyklus wird die Preßform 10 geöffnet und der endgeformte Rahmen 2 (Fig. 6 bis 8) entnommen. Die Umfangskanten des Rahmens 2 können beschliffen oder poliert werden. Der Rahmen 2 kann anschließend mit einem Schutzlack versehen werden, beispielsweise mit Polyesterharz.

Wie ersichtlich kann die Preßform 10 einfach durch Austauschen der Schablone 13 an unterschiedliche Formen des Rahmens 2 angepaßt werden. Fig. 5 zeigt eine alternative Ausführungsform 13' der Schablone, welche nur mehr auf die unbedingt maßzuhaltenden Umfangsbegrenzungen des Vorformlings 1 reduziert ist, und zwar die Linsenöffnungen 3, den Nasenstegbereich 2' und die Laschen 5 des Rahmens 2. Dadurch hat der Vorformling 1 beim Preßvorgang die Möglichkeit, sich an seinen nicht von der Schablone 13' begrenzten Umfangsabschnitten seitlich auszudehnen, was die Toleranzanforderung an die Schablone 13' und/oder den Vorformling 1 reduziert und dadurch die Fertigung erleichtert.

Um das Einsetzen der Linsen 4 in die Linsenöffnungen 3 des fertigen Rahmens 2 zu erleichtern, können die Laschen 5 mit seitlichen Dehnschlitzen 14 versehen werden, welche ein Aufspreitzen des Rahmens 2 gestatten, siehe Pfeil 15 in Fig. 9. Durch Anbringen einer entsprechenden Klemmhülse 16, die gleichzeitig Teil eines Scharniers für die Ohrenbügel 6 sein kann, können der Dehnschlitz 14 und damit der Rahmen 2 geschlossen werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Rahmen (2) für eine optische Brille, einstückig gebildet aus einem mit Linsenöffnungen (3) versehenen, geschichteten, kohlefaserhältigen Verbundmaterial (9) mit zumindest einer Kohlefaserschicht (7, 7'), **dadurch gekennzeichnet, daß** der Rahmen (2) aus einem flächigen Verbundmaterial, das zusätzlich zu der mindestens einen Kohlefaserschicht (7, 7') auch zumindest eine Glasfaserschicht (8, 8') umfaßt, ausgeschnitten oder ausgestanzt ist.

2. Rahmen (2) nach Anspruch 1, **dadurch gekennzeichnet, daß** das Verbundmaterial (9) insgesamt vier bis zwölf, bevorzugt sechs bis zehn, besonders bevorzugt acht Faserschichten (7, 7', 8, 8') umfaßt, von denen zwei bis sechs Kohlefaserschichten (7, 7') und zwei bis sechs Glasfaserschichten (8, 8') sind.

3. Rahmen (2) nach Anspruch 1 oder 2, **dadurch gekennzeichnet, daß** die Faserschichten (7, 7', 8, 8') aus Fasergewebe-oder Fasergelege-Prepregs gebildet sind.

4. Rahmen (2) nach einem der Ansprüche 1 bis 3, **dadurch gekennzeichnet, daß** die Kohlefaser- und Glasfaserschichten (7, 7', 8, 8') im Verbundmaterial (9) - mit Ausnahme der beiden innersten Schichten, welche gegebenenfalls gleich sein können - einander abwechseln.

5. Rahmen (2) nach einem der Ansprüche 1 bis 4, **dadurch gekennzeichnet, daß** zumindest zwei übereinanderliegende Schichten (7, 7', 8, 8') bezüglich ihrer Faserrichtung(en) gegeneinander verdreht sind, bevorzugt um 45°.

6. Rahmen (2) nach einem der Ansprüche 1 bis 5, **dadurch gekennzeichnet, daß** die beiden äußersten Schichten des Verbundmaterials (9) Glasfaserschichten (8, 8') sind.

7. Rahmen (2) nach Anspruch 6, **dadurch gekennzeichnet, daß** zumindest eine der Glasfaserschichten (8') aus gefärbten oder beschichteten Glasfasern gefertigt ist, bevorzugt aus metallisierten Glasfasern, besonders bevorzugt aus verchromten, aluminium- oder goldbedampften Glasfasern.

8. Rahmen (2) nach einem der Ansprüche 1 bis 7, **dadurch gekennzeichnet, daß** er seitlich mit Dehnschlitzen (14) versehen ist, um das Einsetzen von Linsen (4) in die Linsenöffnungen (3) zu erleichtern.

9. Verfahren zum Herstellen eines Rahmens (2) für eine optische Brille aus einem Verbundmaterial (9), das mindestens eine Kohlefaserschicht enthält, **gekennzeichnet durch** die Schritte:
Aufschichten zumindest eines flächigen Kohlefaser-Prepregs (7, 7') und zumindest eines flächigen Glasfaser-Prepregs (8, 8') zu einem flächigen Verbundmaterial (9),
Ausschneiden oder Ausstanzen eines flächigen Vorformlings (1) mit der Umfangsform des Rahmens (2) aus dem Verbundmaterial (9), und
Aushärten des Vorformlings (1) unter Krümmen desselben zur Endform des Rahmens (2).

10. Verfahren nach Anspruch 9, **dadurch gekennzeichnet, daß** insgesamt vier bis zwölf, bevorzugt sechs bis zehn, besonders bevorzugt acht Prepregs (7, 7', 8, 8') aufgeschichtet werden, von denen zwei bis sechs Kohlefaser-Prepregs (7, 7') und zwei bis sechs Glasfaser-Prepregs (8, 8') sind.

11. Verfahren nach Anspruch 9 oder 10, **dadurch gekennzeichnet, daß** als Prepregs (7, 7', 8, 8') Fasergewebe- oder Fasergelege-Prepregs verwendet werden.

12. Verfahren nach einem der Ansprüche 9 bis 11, **dadurch gekennzeichnet, daß** die Kohlefaser- und Glasfaser-Prepregs (7, 7', 8, 8') - mit Ausnahme der beiden innersten Prepregs, welche gegebenenfalls gleich sein können - abwechselnd zum Verbundmaterial (9) aufgeschichtet werden.

13. Verfahren nach einem der Ansprüche 9 bis 12, **dadurch gekennzeichnet, daß** zumindest zwei übereinanderliegende Prepregs (7, 7', 8, 8') bezüglich ihrer Faserrichtung(en) gegeneinander verdreht werden, bevorzugt um 45°.

14. Verfahren nach einem der Ansprüche 9 bis 13, **dadurch gekennzeichnet, daß** als äußerste Prepregs des Verbundmaterials (9) Glasfaser-Prepregs (8, 8') verwendet werden, bevorzugt aus gefärbten oder beschichteten Glasfasern.

15. Verfahren nach Anspruch 14, **dadurch gekennzeichnet, daß** zumindest eines der Glasfaser-Prepregs (8') aus gefärbten oder beschichteten Glasfasern gefertigt wird, bevorzugt aus metallisierten Glasfasern, besonders bevorzugt aus verchromten, aluminium- oder goldbedampften Glasfasern.

## Claims

1. A frame (2) for a pair of optical glasses, formed as an integral piece made of a laminated carbon fiber-reinforced composite material (9) comprising at least one carbon fiber layer (7, 7') and provided with lens openings (3), **characterized in that** the frame (2) is cut or punched from a flat composite material, which, in addition to the at least one carbon fiber layer (7, 7'), also comprises at least one glass fiber layer (8, 8').

2. The frame (2) according to claim 1, **characterized in that** the composite material (9) comprises a total of four to twelve, preferably six to ten, particularly preferably eight fiber layers (7 , 7' , 8, 8'), of which two to six are carbon fiber layers (7, 7') and two to six are glass fiber layers (8, 8').

3. The frame (2) according to claim 1 or 2, **characterized in that** the fiber layers (7, 7', 8, 8') are formed from woven or non-woven prepregs.

4. The frame (2) according to any one of claims 1 to 3, **characterized in that** the carbon fiber and glass fiber layers (7, 7', 8, 8') are alternated in the composite material (9) - with the exception of the two innermost layers, which can optionally be the same.

5. The frame (2) according to any one of claims 1 to 4, **characterized in that** at least two layers (7, 7', 8, 8') arranged one on top of the other are rotated relative to one another, preferably by 45°, in terms of the direction(s) of their fibers.

6. The frame (2) according to any one of claims 1 to 5, **characterized in that** the two outermost layers of the composite material (9) are glass fiber layers (8, 8').

7. The frame (2) according to claim 6, **characterized in that** at least one of the glass fiber layers (8') is made of colored or coated glass fibers, preferably of metallized glass fibers, particularly preferably of chrome-plated or of aluminum- or goldsputtered glass fibers.

8. The frame (2) according to any one of claims 1 to 7, **characterized in that** it is equipped with lateral expansion slots (14) to facilitate the insertion of lenses (4) into the lens openings (3).

9. A method for producing a frame (2) for a pair of optical glasses made of a composite material (9) which contains at least one carbon fiber layer, **characterized by** the following steps:
laminating at least one flat carbon fiber prepreg (7, 7') and at least one flat glass fiber prepreg (8, 8') to form a flat composite material (9),
cutting or punching a flat preform (1) having the peripheral shape of the frame (2) from the composite material (9), and
hardening the preform (1) while curving the same into the final shape of the frame (2).

10. The method according to claim 9, **characterized in that** a total of four to twelve, preferably six to ten, particularly preferably eight prepregs (7, 7', 8, 8') are laminated, of which two to six are carbon fiber prepregs (7, 7') and two to six are glass fiber prepregs (8, 8').

11. The method according to claim 9 or 10, **characterized in that** woven-fiber or non-woven-fiber prepregs are used as prepregs (7, 7', 8, 8').

12. The method according to any one of claims 9 to 11, **characterized in that** the carbon fiber and glass fiber prepregs (7, 7', 8, 8') are layered alternatingly - with the exception of the two innermost prepregs, which can optionally be the same - to form the composite material (9).

13. The method according to any one of claims 9 to 12, **characterized in that** at least two prepregs (7, 7', 8, 8') arranged one on top of the other are rotated relative to one another, preferably by 45°, in terms of their fiber direction(s).

14. The method according to any one of claims 9 to 13, **characterized in that** glass fiber prepregs (8, 8'), preferably comprising colored or coated glass fibers, can be used as the outermost prepregs in the composite material (9).

15. The method according to claim 14, **characterized in that** at least one of the glass fiber prepregs (8') is made of colored or coated glass fibers, preferably of metallized glass fibers, particularly preferably of chrome-plated or of aluminum- or gold-sputtered glass fibers.

## Revendications

1. Cadre (2) pour des lunettes optiques, formé d'un seul tenant à partir d'un matériau composite (9) stratifié contenant des fibres de carbone, doté d'ouvertures pour les verres (3), comportant au moins une couche de fibres de carbone (7, 7'), **caractérisé en ce que** le cadre (2) est découpé ou estampé dans un matériau composite plat qui comprend en plus d'au moins la couche de fibres de carbone (7, 7'), également au moins une couche de fibres de verre (8, 8').

2. Cadre (2) selon la revendication 1, **caractérisé en ce que** le matériau composite (9) comprend au total quatre à douze, de préférence six à dix, de manière particulièrement préférée, huit couches de fibres (7, 7', 8, 8') parmi lesquelles deux à six sont des couches de fibres de carbone (7, 7') et deux à six sont des couches de fibres de verre (8, 8').

3. Cadre (2) selon la revendication 1 ou 2, **caractérisé en ce que** les couches de fibres (7, 7', 8, 8') sont formées de matériaux pré-imprégnés de tissus de fibres ou de non-tissés de fibres.

4. Cadre (2) selon l'une des revendications 1 à 3, **caractérisé en ce que** les couches de fibres de carbone et de fibres de verre (7, 7', 8, 8') du matériau composite (9) alternent - à l'exception des deux couches les plus intérieures qui peuvent éventuellement être les mêmes.

5. Cadre (2) selon l'une des revendications 1 à 4, **caractérisé en ce qu'**au moins deux couches superposées (7, 7', 8, 8') sont tournées, pour ce qui concerne l'orientation de leur(s) fibre(s), les unes par rapport aux autres, de préférence de 45°.

6. Cadre (2) selon l'une des revendications 1 à 5, **caractérisé en ce que** les deux couches les plus extérieures du matériau composite (9) sont des couches de fibres de verre (8, 8').

7. Cadre (2) selon la revendication 6, **caractérisé en ce qu'**au moins l'une des couches de fibres de verre (8') est produite à partir de fibres de verres colorées ou revêtues, de préférence, à partir de fibres de verre métallisées, de manière particulièrement préférées, de fibres de verre chromées ou revêtues d'une couche d'aluminium ou d'or vaporisée.

8. Cadre (2) selon l'une des revendications 1 à 7, **caractérisé en ce qu'**il est doté latéralement de fentes d'extension (14) pour faciliter la pose des verres (4) dans les ouvertures (3) pour les verres.

9. Procédé de fabrication d'un cadre (2) pour des lunettes optiques, constitué d'un matériau composite (9) contenant au moins une couche de fibres de carbone, **caractérisé par** les étapes suivantes :
superposition d'au moins un matériau pré-imprégné de fibres de carbone plat (7, 7') et d'au moins un matériau pré-imprégné de fibres de verre plat (8, 8') pour donner un matériau composite plat (9),
découpe ou estampage d'un préformé plat (1) ayant la forme périphérique du cadre (2) dans le matériau composite (9), et
durcissement du préformé (1) en le courbant à la forme définitive du cadre (2).

10. Procédé selon la revendication 9, **caractérisé en ce que**, au total, quatre à douze, de préférence six à dix, de manière particulièrement préférée, huit préformés (7, 7', 8, 8') sont superposés, parmi lesquels deux à six sont des préformés de fibres de carbone (7, 7') et deux à six sont des préformés de fibres de verre (8, 8').

11. Procédé selon la revendication 9 ou 10, **caractérisé en ce que** l'on utilise comme préformés (7, 7', 8, 8'), des matériaux pré-imprégnés de tissus de fibres ou de non-tissés de fibres.

12. Procédé selon l'une des revendications 9 à 11, **caractérisé en ce que** les préformés de fibres de carbone et de fibres de verre (7, 7', 8, 8') sont superposés alternativement pour donner le matériau composite - à l'exception des deux matériaux pré-imprégnés les plus intérieurs qui peuvent éventuellement être les mêmes.

13. Procédé selon l'une des revendications 9 à 12, **caractérisé en ce qu'**au moins deux matériaux pré-imprégnés superposés (7, 7', 8, 8') sont tournés, pour ce qui concerne l'orientation de leur(s) fibre(s), les uns par rapport aux autres, de préférence de 45°.

14. Procédé selon l'une des revendications 9 à 13, **caractérisé en ce que** l'on utilise comme matériau pré-imprégné le plus extérieur du matériau composite (9), des matériaux pré-imprégnés de fibres de verre (8, 8'), de préférence de fibres de verre colorées ou revêtues.

15. Procédé selon la revendication 14, **caractérisé en ce qu'**au moins l'un des matériaux pré-imprégnés de fibres de verre (8') est fabriqué à partir de fibres de verre colorées ou revêtues, de préférence, à partir de fibres de verre métallisées, de manière particulièrement préférées, de fibres de verre chromées ou revêtues d'une couche d'aluminium ou d'or vaporisée.
